Europäisches Patentamt

European Patent Office

Office européen des brevets

(19)

(11) Veröffentlichungsnummer: **0 127 584**
**A1**

## (12) EUROPÄISCHE PATENTANMELDUNG

(21) Anmeldenummer: **84810267.9**

(22) Anmeldetag: **29.05.84**

(51) Int. Cl.$^3$: **B 65 G 33/04**
**B 65 G 33/00**

(30) Priorität: **31.05.83 CH 2981/83**

(43) Veröffentlichungstag der Anmeldung:
**05.12.84 Patentblatt 84/49**

(84) Benannte Vertragsstaaten:
**AT BE CH DE FR GB IT LI NL SE**

(71) Anmelder: **CANTEC, INC.**
**2214 The Texas Building**
**Fort Worth Texas 76102(US)**

(72) Erfinder: **Frei, Siegfried**
**Schoeckstrasse 3**
**CH-9000 St. Gallen(CH)**

(74) Vertreter: **Gachnang, Hans Rudolf**
**Algisserstrasse 33**
**CH-8500 Frauenfeld(CH)**

(54) **Förderschneckentransport zum Transportieren von sich folgenden Werkstücken zu einer Bearbeitungsmaschine mit auf einer Bahn umlaufenden Werkzeugen.**

(57) Ein Förderschneckentransport wird in zwei Abschnitte (1, 2; 27, 28) aufgeteilt, wobei der erste Abschnitt (1, 27) mit einer geringeren Drehzahl (nl) als der zweite Abschnitt (2, 28) angetrieben wird. Dem zweiten Abschnitt (2, 28) wird dadurch nur nach einem Mehrfachen der Umdrehungen des ersten Abschnittes (1, 27) ein Werkstück, z.B. eine Dose (20) übergeben. Der Abstand a zwischen den sich folgenden Dosen (20) kann damit erhöht werden.

Fig. 1

EP 0 127 584 A1

0127584

- 1 -

Förderschneckentransport zum Transportieren von sich

folgenden Werkstücken zu einer Bearbeitungsmaschine mit auf einer Bahn umlaufenden Werkzeugen

Die Erfindung betrifft einen Förderschneckentransport.

Förderschnecken zum Transportieren von Gegenständen, z.B. Dosenrümpfen, Flaschen etc., sind allgemein bekannt und werden insbesondere zum Beschicken von Maschinen mit einer Vielzahl von in einem festen gegenseitigen Abstand umlaufenden Bearbeitungsstationen verwendet. Mit solchen Förderschnecken können z.B. in unregelmässigen Abständen oder sich abstandslos folgende Dosenkörper exakt mit vorbestimmter, immer

- 2 -

konstant bleibender Geschwindigkeit, im richtigen Zeitpunkt und mit gegenseitigem Abstand in ein Bearbeitungswerkzeug oder einem diesem zugeordneten Drehstern eingeführt werden.

Sofern die Förderschnecke aus einem Material mit guten Gleiteigenschaften hergestellt ist, kann die Steigung der Windungen von anfänglch 0° auf über 30° erhöht werden, und der Abstand zwischen den sich folgenden Werkstücken kann damit von anfänglich (zwischen der ersten und der zweiten Windung) wenigen Millimetern auf ein Vielfaches, z.B. auf den Abstand der Werkzeuge, erhöht werden.

Es kann nun aber vorkommen, dass der gegenseitige Abstand der sich folgenden Gegenstände einen Wert aufweisen muss, der eine Steigung der Windungen auf der Schnecke bedingt, bei der das Verhältnis der axial zu den radial auf die Werkstücke ($F_a$:$F_r$) wirkenden Kräften durch die Windungen so gering wird, dass ein sicherer Vorschub infolge Selbsthemmungserscheinungen kaum mehr gewährleistet ist. Insbesondere dünnwandige, in sich sehr elastische Dosenrümpfe (ohne Boden und Deckel) können bei zu grosser Radialkomponente $F_r$ zwischen der Schnecke und der parallel dazu verlaufenden Führungsschiene zerquetscht werden.

- 3 -

Die Forderung nach vergrössertem Abstand der Werkstücke am Ende (Auslauf) der Schnecke kann sich insbesondere daraus ergeben, dass beispielsweise nur jedes zweite Werkzeug einer Bearbeitungsmaschine mit einem Werkstück beschickt werden soll, ohne dass die Beschickungsgeschwindigkeit geändert, d.h. auf die Hälfte reduziert wird. Mit einer Reduktion der Drehzahl der Förderschnecke auf die Hälfte kann dieser Forderung nicht nachgekommen werden, weil der Abstand zwischen der sich am Uebergabeort am Werkzeug befindlichen Dose und der in der nachfolgenden Windung befindlichen Dose konstant bleibt und demzufolge die zweite Dose mit dem nachfolgenden, ausser Betrieb befindlichen Werkzeug kollidieren würde.

Die Erfindung hat sich daher die Aufgabe gestellt, die Nachteile der herkömmlichen Förderschnecken zu vermeiden und eine Vorrichtung zu schaffen, gemäss welcher bei gleichbleibender Länge der Schnecke (Transportweg) am Ende der Förderstrecke ein gegenüber dem herkömmlichen Wert mehrfacher Abstand zwischen den sich folgenden Werkstücken erreicht werden kann, ohne dass die radial auf die Werkstücke wirkenden Kräfte der Schnecke ansteigen.

Erfindungsgemäss werden diese Aufgaben dadurch gelöst, dass die Förderschnecke axial in zwei Abschnitte aufge-

- 4 -

teilt ist, wobei der eingangsseitig liegende Abschnitt mit einer geringeren, jedoch in einem konstanten Verhältnis zur Drehzahl des ausgangseitigen Abschnittes stehenden Drehzahl antreibbar ist.
Weitere vorteilhafte Ausführungsformen sind in den abhängigen Ansprüchen definiert.

Die Aufteilung der Schnecke in zwei Abschnitte und die Erhöhung der Drehzahl im zweiten Transportabschnitt ermöglichen die Beibehaltung idealer Verhältnisse der axial und der radial auf die Werkstücke wirkenden Kräfte über die gesamte Förderstrecke der Schnecke sowie eine Vervielfachung des gegenseitigen Abstandes der Dosen am Ausgang der Schnecke.

Anhand illustrierter Anführungsbeispiele mit Dosen wird die Erfindung näher beschrieben. Es zeigen:

Figur 1    eine schematische Darstellung einer Förderschnecke mit zwei schneckenförmigen Abschnitten und einem Antrieb,

Figur 2    eine schematische Darstellung einer Förderschnecke mit einem scheibenförmigen Abschnitt und einem Antrieb und

- 5 -

Figur 3    eine Ansicht des scheibenförmigen
           Abschnittes.

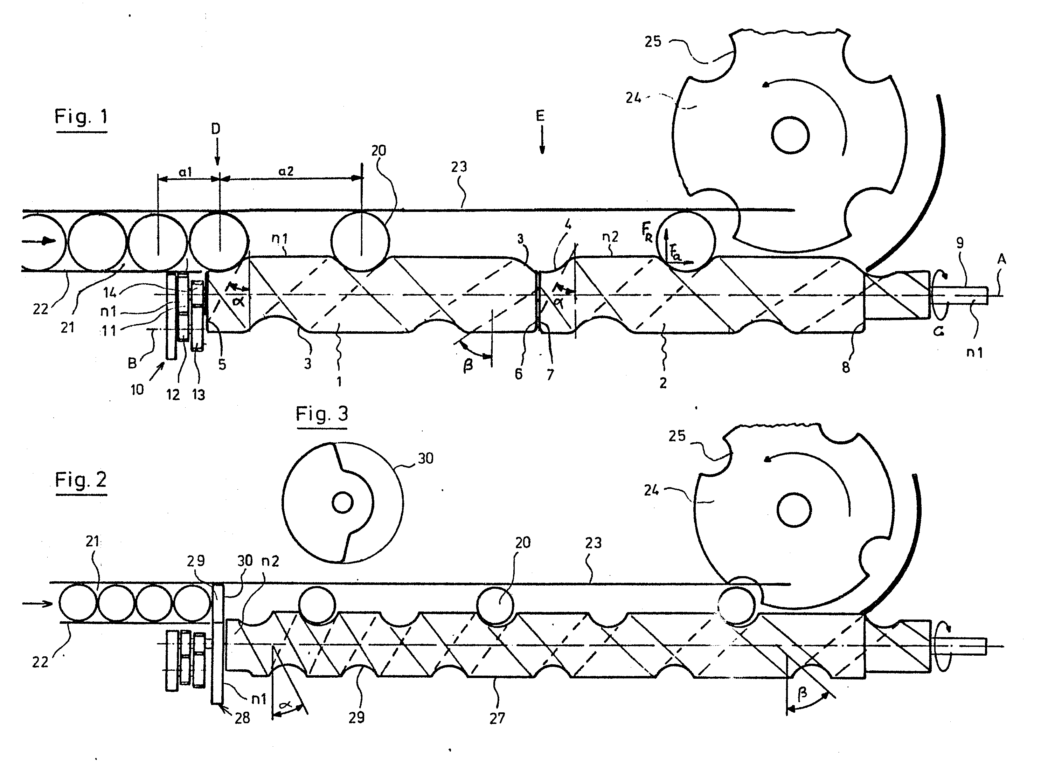

In Figur 1 sind auf einer Achse A in Serie zwei Förderschneckenabschnitte 1 und 2 antreibbar gelagert. Jeder der Abschnitte 1 und 2 weist an der Peripherie einen schraubenförmig verlaufenden Einstich 3 bzw. 4 in Gestalt einer halbkreisförmigen Ausnehmung auf. Die Steigung $\alpha$ am einlaufseitigen Ende 5 des Abschnittes 1 nimmt bis zum auslaufseitigen Ende 6 stetig bis zum Wert $\beta$ zu. Der Abstand zwischen den einzelnen Windungen des Einstiches 3 vergrössert sich damit in entsprechendem Ausmass. Der Einstich 4 auf dem Abschnitt 2 weist am eingangsseitigen Ende 7 ebenfalls eine geringe Steigung, z.B. $\alpha$ , und am ausgangs-seitigen Ende 8 eine grössere Steigung, z.B. $\beta$ , auf. Im gezeigten Beispiel sind die Einstiche 3,4 auf den beiden Abschnitten 1,2 somit identisch; sie können auch unterschiedlich sein. Insbesondere kann die Zunahme der Steigung auf dem zweiten Abschnitt geringer als auf dem ersten sein.

0127584

- 6 -

Der erste Abschnitt 1 wird im vorliegenden Beispiel über Welle 9 mit einer Drehzahl $n_1$, der zweite Abschnitt 2 mit einer Drehzahl $n_2$ angetrieben. Das Verhältnis $n_1:n_2$ ist konstant. Aus diesem Grunde erfolgt der Antrieb des Abschnittes 2 vorzugsweise über ein Getriebe 10 am Ende 5, dessen eingangsseitiges Ritzel 11 starr auf dem verlängerten Ende der Welle 9 des Abschnittes 1 aufgesetzt ist und sich mit der Geschwindigkeit $n_1$ dreht. Auf einer zur Achse A parallelen Achse B sitzen zwei weitere, starr miteinander verbundene Ritzel 12 und 13. Das Ritzel 12 steht im Eingriff mit dem Ritzel 11; das Ritzel 13 kämmt mit einem Ritzel 14, welches drehfest mit dem Abschnitt 2 in Verbindung steht. Bei einem Uebersetzungsverhältnis von beispielsweise 1:2 im Getriebe 10 dreht der Abschnitt 2 folglich doppelt so schnell wie der Abschnitt 1.

Das auslaufseitige Ende des Einstiches 3 auf dem Abschnitt 1 und das einlaufseitige Ende des Einstiches 4 auf dem Abschnitt 2 treffen sich in der Folge bei jeder vollen Umdrehung des Abschnittes 1 und bei jeder zweiten vollen Umdrehung des Abschnittes 2 jeweils an der gleichen Stelle.

Wenn also die Steigung $\alpha$ am ausgangsseitigen Ende 6 des Abschnittes 1 doppelt so gross ist wie die Steigung $\alpha$ am Anfang 7 des Abschnittes 2 und der Abschnitt 2 mit doppelter Drehzahl $n_2$ ($n_2 = 2n_1$) gegenüber dem Abschnitt 1 umläuft, so ist die Geschwindigkeitskomponente längs der Schneckenabschnitte 1 und 2 an den Enden 6 und 7 identisch.

Auf einem Dosentransportsystem 21 herkömmlicher Bauweise werden aufrechtstehende Dosenrümpfe 20 in ununterbrochener Folge von einem endlos umlaufenden Band an das eingangsseitige Ende 5 des Abschnittes 1 herangebracht und seitlich von Führungsschienen 22,23 geführt. Die Schiene 22 endet an der Stirnseite des Abschnittes 1; die Schiene 23 läuft parallel und in einem Abstand entlang der Abschnitte 1 und 2 weiter. Am ausgangsseitigen Ende 8 des Abschnittes 2 greift ein Drehstern 24 in den Bereich zwischen der Führungsschiene 23 und der Oberfläche des Abschnittes 2 ein und übernimmt die Dosenkörper 20 aus dem Einstich 4 am Ende 8 des Abschnittes 2.

- ö -

Drehen sich die Abschnitte 1 und 2 nun in Richtung des Pfeils C, so wird jeweils bei jeder vollen Umdrehung des Abschnittes 1 ein Dosenrumpf 20 vom Einstich 3 erfasst und von diesem längs des Abschnittes 1 nach rechts geführt. Nach einer Umdrehung des Abschnittes 1 befindet sich der Dosenkörper 20 demzufolge an der Stelle D und der axiale Abstand zum nachfolgenden Dosenkörper hat sich von $a_1$ auf $a_2$ vergrössert. Nach einer weiteren Umdrehung erreicht der Dosenkörper 20 die Stelle E am Ende 6 des Abschnittes 1.

Am Ende 6 verlässt der Dosenkörper 20 den Abschnitt 1 und wird vom Einstich 4 des Abschnittes 2, der sich in diesem Moment gegenüber dem Einstich 3 befindet, übernommen. Die axiale Geschwindigkeitskomponente (Vorschubgeschwindigkeit) des Dosenkörpers 20 erfährt im Uebergang aber trotzdem keine Aenderung. Die doppelte Drehzahl $n_2$ des Abschnittes 2 bewirkt nämlich bei auf die Hälfte reduzierter Steigung $\alpha$ ($\alpha = \frac{\beta}{2}$) die gleiche Vorschubgeschwindigkeit. Was sich hingegen ändert sind die Kräfte, welche vom schneckenförmigen Einstich 3 auf die Dose 20 einwirken: Die Radialkomponente $F_r$, welche mit zunehmendem Steigungswinkel des Einstiches 3 mit $\beta$ einen Wert erreicht hat, der nicht überschritten werden sollte, um einen zuverlässigen Vorschub des Dosenkörpers 20 zu gewährleisten, reduziert sich zu Beginn des Einstiches 4 auf dem Abschnitt 2 wieder auf den gleichen Wert wie zu Beginn auf dem Abschnitt 1. Trotz erhöhter Vorschubgeschwindigkeit bleiben die Kräfte auf den Dosenkörper 20 damit die gleichen wie im ersten Abschnitt 1. Der Abstand zwischen den sich folgenden Dosen 20 nimmt hingegen zu, da nur noch in jeder zweiten Windung eine Dose 20 befördert wird und demzufolge nur jeder zweiten Ausnehmung 25 auf dem Drehstern eine Dose übergeben wird.

In einer weiteren Ausgestaltung der Erfindung, insbesondere an langsamlaufenden Maschinen, kann anstelle von zwei mit unterschiedlicher Drehzahl angetriebenen Schneckenabschnitten 1 und 2 von einer herkömmlichen Schnecke 27 ein Dosenrückhalter 28 angebracht werden, welcher nur bei jeder zweiten (oder dritten, usw.) Umdrehung der Schnecke 27 einen Dosenrumpf 20 an den Einstich 29 übergibt. Damit wird der Abstand zwischen den sich folgenden Dosenrümpfen 20 auf der Schnecke 27 verdoppelt (oder verdreifacht, usw.). Ein solcher Dosenrückhalter 28 kann beispielsweise ein rotierendes Scheibensegment 30 sein, das den Eingang zur Schnecke 27 jeweils nur bei jeder zweiten, dritten, usw. Umdrehung freigibt (Fig. 2). Anstelle eines Scheibensegmentes 30 kann selbstverständlich jedes andere, jeweils nur bei jeder zweiten, dritten, etc. Umdrehung der Schnecke 27 eine Dose 20 freigebendes Mittel vorgesehen werden, z.B. eine Magnetbremse, ein Rückhaltestift etc. Der Antrieb des Dosenrückhalters 28 kann in analoger Weise durch ein Getriebe, wie in Figur 1 gezeigt, erfolgen.

Es eröffnen sich nun Möglichkeiten, nur jedem x-ten Werkzeug der Bearbeitungsstation, z.B. einer Verschlussmaschine, einer Sickenmaschine, o.ä., einen Dosenrumpf zuzuführen ohne dass der optimale Arbeitstakt verringert werden muss. Des weiteren kann eine Verschluss- oder Sickenmaschine mit zehn Werkzeugen, abwechslungsweise je fünf Werkzeuge für einen Dosendurchmesser 73 mm und fünf Werkzeuge für einen Durchmesser 99 mm, bestückt werden und damit ohne Umrüstzeit wahlweise Dosen mit unterschiedlichem Durchmesser bearbeiten.

Selbstverständlich kann die beschriebene Vorrichtung nicht nur für Dosen, sondern auch für andere, mit einer Schnecke förderbare Güter Verwendung finden.

- 1 -

PATENTANSPRUECHE

1. Förderschneckentransport zum Transportieren von Werkstücken zu einer Bearbeitungsmaschine mit auf einer Bahn umlaufenden Bearbeitungswerkzeugen, bestehend aus einer einen zunehmenden Steigungswinkel aufweisenden Förderschnecke und einer parallel zu dieser liegenden Führungsschiene, dadurch gekennzeichnet, dass die Förderschnecke axial in zwei Abschnitte (1,2;27,28) aufgeteilt ist, wobei der eingangsseitig liegende Abschnitt (1,28) mit einer geringeren, jedoch in einem konstanten Verhältnis zur Drehzahl ($n_2$) des ausgangsseitigen Abschnittes (2) stehenden Drehzahl (nl) antreibbar ist.

2. Förderschneckentransport nach Anspruch 1, dadurch gekennzeichnet, dass der erste Abschnitt (1) und der zweite Abschnitt (2) je aus einer Förderschnecke (1,27) bestehen.

3. Förderschneckentransport nach Anspruch 2, dadurch gekennzeichnet, dass der Steigungswinkel $\propto$ des Einstiches (4) am zweiten Abschnitt (2) vom einlaufseitigen Ende (7) zum auslaufseitigen Ende (8)

- 2 -

zunimmt, wobei der Steigungswinkel $\beta$ des Einstiches (3) am Auslauf (6) des ersten Abschnittes (1) zum Steigungswinkel $\alpha$ des Einstiches (4) am Einlauf (7) des zweiten Abschnittes (2) im Verhältnis der Drehzahlen $n_2:n_1$ zueinander stehen.

4. Förderschneckentransport nach Anspruch 1, dadurch gekennzeichnet, dass der erste Abschnitt (28) als Werkstückrückhalter (28) ausgebildet ist, der jeweils bei jeder x-ten Umdrehung des zweiten Abschnittes (2) ein Werkstück (20) in den Einstich (29) eintreten lässt.

5. Förderschneckentransport nach Anspruch 1, dadurch gekennzeichnet, dass der Einstich (3) am auslaufseitigen Ende (6) des Abschnittes (1) und der Einstich (4) am einlaufseitigen Ende (7) des Abschnittes (2) jeweils nach jeder vollen Umdrehung des Abschnittes (1) im Bereich der Schiene (23) einander gegenüberliegen.

6. Förderschneckentransport nach Anspruch 5, dadurch gekennzeichnet, dass der Werkstückrückhalter (28) als Segmentscheibe (30) ausgebildet ist.

Fig. 1

Fig. 2

Fig. 3

a1 a2

D E

25 24

20 23

n1 n2

3 4

F_R F_a

9 A

22 21 n1 11 14

B 10 12 13 5

α β 6 7

1 3 2 8 G n1

30

25 24

21 29 30 n2 20 23

22 28 n1 α 29 27 β

0127584

# Europäisches Patentamt

## EUROPÄISCHER RECHERCHENBERICHT

| Kategorie | EINSCHLÄGIGE DOKUMENTE Kennzeichnung des Dokuments mit Angabe, soweit erforderlich, der maßgeblichen Teile | Betrifft Anspruch | EP 84810267.9 KLASSIFIKATION DER ANMELDUNG (Int. Cl. ³) |
|---|---|---|---|
| | FR - A - 2 156 497 (AUTOMATISME ET TECHNIQUE) | | B 65 G 33/04 B 65 G 33/00 |
| Y | * Seite 1, Zeile 38 - Seite 2, Zeile 11 * | 1,3 | |
| X | * Fig. * | 2 | |
| | -- | | |
| Y | DE - A - 2 259 720 (HOLSTEIN) | 1,3 | |
| | * Fig. 1 * | | |
| | -- | | |
| Y | AU - B - 445 499 (GOTTSCHO) | 1,3 | |
| | * Fig. 3 * | | |
| | ---- | | |
| | | | **RECHERCHIERTE SACHGEBIETE (Int. Cl. ³)** |
| | | | B 65 B B 65 G |

Der vorliegende Recherchenbericht wurde für alle Patentansprüche erstellt.

| Recherchenort WIEN | Abschlußdatum der Recherche 05-09-1984 | Prüfer BAUMGARTNER |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

PA Form 1503. 03.82